(19) Europäisches Patentamt
European Patent Office
Office européen des brevets

(11) Veröffentlichungsnummer: **0 471 164 B1**

(12) **EUROPÄISCHE PATENTSCHRIFT**

(45) Veröffentlichungstag der Patentschrift: **15.11.95**

(51) Int. Cl.6: **C07F 7/18**, C07F 7/08

(21) Anmeldenummer: **91109869.7**

(22) Anmeldetag: **17.06.91**

# (54) Verfahren zur Herstellung von Mercaptosilanen.

(30) Priorität: **16.08.90 DE 4025866**

(43) Veröffentlichungstag der Anmeldung:
**19.02.92 Patentblatt 92/08**

(45) Bekanntmachung des Hinweises auf die Patenterteilung:
**15.11.95 Patentblatt 95/46**

(84) Benannte Vertragsstaaten:
**BE DE ES FR GB IT NL**

(56) Entgegenhaltungen:
**EP-A- 0 018 094**
**GB-A- 1 102 251**
**US-A- 3 849 471**
**US-A- 4 082 790**

(73) Patentinhaber: **HÜLS AKTIENGESELLSCHAFT**
**D-45764 Marl (DE)**

(72) Erfinder: **Rauleder, Hartwig, Dr.**
**Uhlandweg 51 a**
**W-7888 Rheinfelden (DE)**
Erfinder: **Seiler, Claus-Dietrich, Dr.**
**In der Klus 10**
**W-7888 Rheinfelden (DE)**
Erfinder: **Kötzsch, Hans-Joachim, Dr.**
**Fecampring 28**
**W-7888 Rheinfelden (DE)**
Erfinder: **Standke, Burkhard, Dr.**
**Burstelstrasse 2 a**
**W-7888 Rheinfelden (DE)**

**EP 0 471 164 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung ist ein Verfahren zur Herstellung von Mercaptosilanen, bei dem die entsprechenden Halogenorganylsilan-Verbindungen mit einem Alkalihydrogensulfid in Gegenwart eines polaren, aprotischen Mediums umgesetzt werden.

Es ist bekannt, Mercaptosilane in einer Einschrittreaktion durch Umsetzung für diese Reaktion geeigneter Halogenorganylsilan-Verbindungen mit Thioharnstoff und Ammoniak herzustellen (DE-AS 20 35 619/US-PS 3 590 065). Diese Methode hat den Nachteil, daß zur Erzielung wirtschaftlich akzeptabler Umsatzraten lange Chargenzeiten (mehr als 24 Stunden) benötigt werden. Die bei Anwendung dieser Verfahrensweise erzielbaren Ausbeuten sind schwankend und erreichen nur Werte zwischen 75 und 80 %, bezogen auf den Umsatz an eingesetzter Halogenorganylsilan-Verbindung. Weiterhin ist diese Verfahrensweise mit einem Zwangsanfall an Guanidin-Hydrochlorid belastet, dessen Abtrennung zusätzlichen Aufwand erforderlich macht.

Es wurde versucht, die in der DE-AS 20 35 619 beschriebene Verfahrensweise zu verbessern. Durch die Zugabe von Reaktionsbeschleunigern zum Gemisch der Reaktanten konnte eine Verkürzung der Chargenzeiten auf ca. 6 Stunden herbeigeführt werden. Bezüglich der Ausbeute und der anzuwendenden Reaktionstemperaturen ergaben sich jedoch keine Verbesserungen (US-PS 4 401 826).

Verfahren zur Herstellung von Mercaptosilanen durch Umsetzung der entsprechenden Thioacetosilan-Verbindungen mit Alkoholen haben wegen niedriger Ausbeuten und begrenzter Anwendbarkeit dieser Methode keine technische Bedeutung erlangt (US-PS 3 632 826, 3 565 937, 3 565 935, DE-AS 20 38 715).

Keine technische Bedeutung erlangten auch Herstellungsverfahren für Mercaptosilane, die von z. B. Thiopropionsäureamid-Silanen ausgehen und durch Druckhydrierung die Überführung in die entsprechenden Mercaptosilane vornehmen, da die erhaltenen Ausbeuten unbefriedigend sind (EP-PS 0 018 094). Ebenso erbrachten Versuche, Cyanoalkylsilan-Verbindungen in Gegenwart von elementarem Schwefel oder Schwefelwasserstoff zu hydrieren und so zu Mercaptosilanen zu gelangen, keine zufriedenstellenden Ausbeuteergebnisse (US-PS 4 012 403).

Es wurde auch versucht, Mercaptosilane durch gezielte Spaltung von speziellen Thioethersilanen mit Hilfe von Friedel-Crafts-Katalysatoren herzustellen. Diese Verfahrensweise ist wegen der aufwendigen Herstellung der entsprechenden Vorprodukte wirtschaftlich nicht praktizierbar (DE-PS 23 40 886).

Die Herstellung von Mercaptosilanen durch Umsetzung der entsprechenden Halogenorganylsilan-Verbindungen mit Schwefelwasserstoff in Gegenwart von Ethylendiamin und großen Mengen an Schwermetallsulfiden führt zur Bildung von diversen Nebenprodukten, die nur aufwendig vom Zielprodukt abzutrennen sind und zu einem zweiphasigen Rohproduktsystem führen, dessen Aufarbeitung mit den in der DE-PS 33 46 910 beschriebenen Problemen belastet ist (siehe auch US-PS 3 849 471).

Gewisse Verbesserungen gegenüber der in der US-PS 3 849 471 dargelegten Verfahrensweise werden erzielt, wenn die Umsetzung der Ausgangssilane mit Schwefelwasserstoff nicht in Gegenwart von Diaminen, sondern in Gegenwart von Ammoniak, primären, sekundären oder tertiären Aminen, gegebenenfalls zusätzlich in Gegenwart von polaren, protischen oder aprotischen Medien, vorgenommen wird (US-PS 4 082 790). Nachteilig bei dieser Verfahrensweise ist, daß zur Erreichung der für die Umsetzung der Reaktanten erforderlichen Reaktionstemperaturen die Reaktionen in Autoklaven durchgeführt werden müssen. Werden die Umsetzungen in Abwesenheit von polaren Medien vorgenommen, müssen zur Erzielung akzeptabler Umsatzraten unwirtschaftlich lange Reaktionszeiten in Kauf genommen werden. Aber auch der Zusatz von polaren Medien zum Reaktantengemisch bringt nur geringfügige Verkürzungen der Reaktionszeiten mit sich; jedoch treten wegen der gesteigerten Löslichkeit der als Reaktionsnebenprodukte anfallenden Hydrochloride alle die Schwierigkeiten auf, wie sie in der DE-PS 33 46 910 dargelegt werden und die nur durch entsprechende aufwendige Maßnahmen behoben werden könnten, was das Verfahren zusätzlich belastet.

Die Herstellung von Mercaptosilanen durch Umsetzung von Schwefelwasserstoff mit ethylenisch ungesättigten Silanen unter Zuhilfenahme von UV-Licht oder in Gegenwart von Metallen der VIII. Nebengruppe des Periodischen Systems führt zu geringen Ausbeuten an Zielprodukt; die Reaktion ist von starken Nebenproduktbildungen gekennzeichnet (US-PS 3 890 312, DE-AS 10 00 817).

Weiterhin wird die Umsetzung von Alkali-Hydrogensulfiden mit Halogenalkylsilanen in methanolischem Medium zu den entsprechenden Mercaptosilanen beschrieben (GB-PS 1 102 251). Diese Verfahrensweise ist dadurch gekennzeichnet, daß zur Erzielung hoher Umsatzraten außergewöhnlich lange Reaktionszeiten erforderlich und die dabei erhaltenen Ausbeuten unbefriedigend sind. Eine Verbesserung der Verfahrensweise bezüglich einer Verkürzung der Reaktionszeit und der Erhöhung der Ausbeute wird erreicht, wenn man die Reaktion unter gleichzeitiger Einleitung von Schwefelwasserstoff ablaufen läßt. Problematisch bleiben die Rohproduktaufarbeitung im Hinblick auf die Entfernung des bis zur Sättigung im Reaktionsgemisch gelösten Schwefelwasserstoffes und die bei der destillativen Aufarbeitung durch ständige Ausfällung von Alkalichloriden entstehenden Schwierigkeiten.

Es bestand deshalb die Aufgabe, Mercaptosilane so herzustellen, daß die Nachteile der bekannten Verfahrensweisen ausgeschlossen werden, das heißt, ein Verfahren zu finden, welches bei Einsatz preisgünstiger Rohstoffe unter technisch geringem Aufwand zu hohen Raum-Zeit-Ausbeuten führt und bei dem die Rohproduktaufarbeitung nicht durch auskristallisierende Salze und nachtrübende Produktdestillate gekennzeichnet ist.

In Erfüllung dieser Aufgabe wurde ein Verfahren zur Herstellung von Mercaptosilanen durch Umsetzung der entsprechenden Halogenorganylsilan-Verbindungen mit Alkalihydrogensulfiden gefunden, das dadurch gekennzeichnet ist, daß die Umsetzung der Reaktanten in Gegenwart eines polaren, aprotischen Mediums verläuft.

Bei Anwendung der erfindungsgemäßen Verfahrensweise werden die oben geschilderten Nachteile vermieden. Überraschenderweise zeigt sich, daß die Umsetzung der Reaktanten innerhalb kürzester Reaktionszeiten unter Erzielung hoher Ausbeuten eintritt, was zu außergewöhnlich hohen Raum-Zeit-Ausbeuten führt.

Das Verfahren läßt sich bei der Herstellung von Mercaptosilanen der allgemeinen Formel

$$(HS)_a\text{-R-}\underset{\substack{| \\ R^2_p}}{Si}(OR^1)_{3-p}\quad ,$$

in der

- R  ein Alkylenrest mit 1 bis 8 C-Atomen, ein Alkarylenrest, ein Arylalkylenrest oder ein Arylrest sein kann,
- $R^1$  ein Alkylrest mit 1 bis 6 C-Atomen, die durch O-Atome unterbrochen sein können, oder ein Arylrest sein kann,
- $R^2$  ein Alkylrest mit 1 bis 8 C-Atomen, ein Arylrest, ein Alkarylrest oder ein Aralkylrest sein kann,
- p  eine ganze Zahl von 0 bis 3 bedeutet,
- a  eine ganze Zahl von 1 bis 3 sein kann,

und der allgemeinen Formel

$$\left[(HS)_a\text{-R-}\right]_b\underset{\substack{| \\ R^2_p}}{Si}\text{-}(OR^1)_{3-p-(b-1)}$$

anwenden,
in der

- a, R, $R^1$ und $R^2$  die obige Bedeutung besitzen,
- b  2 oder 3 sein und
- p  0, 1 oder 2 bedeuten kann, wobei $b + p \leqq 4$ gilt.

Durch Umsetzung von Verbindungen, welche den vorgenannten allgemeinen Formeln entsprechen, wobei die HS-Gruppe durch ein Chlor- oder Bromatom ersetzt ist, mit Alkalihydrogensulfiden in Gegenwart polarer, aprotischer Medien erhält man die gewünschten Mercaptosilane. Bevorzugt werden folgende Verbindungen nach dem erfindungsgemäßen Verfahren hergestellt:

3-Mercaptopropyltrimethoxysilan

3-Mercaptopropyltriethoxysilan
3-Mercaptopropylmethyldimethoxysilan
2-Mercaptoethyltriethoxysilan
2-Mercaptoethylmethyldiethoxysilan
Mercaptomethyltrimethoxysilan
3-Mercaptopropyldimethylmethoxysilan.
Das Verfahren eignet sich auch zur Herstellung von Verbindungen wie
p-Mercaptophenyltrimethoxysilan
p-(Mercaptomethyl)phenyltrimethoxysilan
2-(p-Mercaptophenyl-)ethyltrimethoxysilan
3-Mercaptopropylethyldimethoxysilan
3-Mercaptopropylphenyldimethoxysilan
3-Mercaptopropyl(2-phenylethyl)dimethoxysilan
2-Mercaptoethyldimethylmethoxysilan
3-Mercaptopropyltrimethylsilan
1,3-Dimercaptopropyltrimethoxysilan
2,4-Dimercaptobutylmethyldimethoxysilan
1,2-Dimercaptoethyltrimethoxysilan
2-(m,p-Dimercaptophenyl)ethyltrimethoxysilan
Mercaptomethyldimethylmethoxysilan
Mercaptopropyldimethylmethoxysilan
Mercaptomethyltrimethylsilan
Di(3-Mercaptopropyl)dimethoxysilan
3-Mercaptopropyl-2-mercaptoethyldimethoxysilan
1,2-Dimercaptoethyldimethylmethoxysilan
und andere mehr.

Zur Herbeiführung der erfindungsgemäßen Effekte bei der Herstellung von Mercaptosilanen durch Umsetzung der entsprechenden Halogenorganylsilan-Verbindungen mit Alkalihydrogensulfiden hat sich die Gegenwart solcher polarer, aprotischer Verbindungen im Reaktantengemisch als besonders wirksam erwiesen, die zur Gruppe der zweifach am Stickstoffatom substituierten Säureamide gehören. Bevorzugte Verbindungen im Sinne der vorliegenden Erfindung sind Dimethylformamid, Diethylformamid, Dimethylacetamid und Diethylacetamid, wobei das Dimethylformamid eine Sonderstellung einnimmt. Auch Gemische dieser substituierten Säureamide können eingesetzt werden.

Für den Ablauf der Reaktion ist es nicht wesentlich, in welcher Reihenfolge die Reaktanten aufeinander einwirken. Die bevorzugte Form des Reaktionsablaufs besteht darin, Alkalihydrogensulfid und polares, aprotisches Medium gemeinsam vorzulegen, das Silan einzudosieren und das Gemisch der Reaktanten bei geeigneter Reaktionstemperatur zur Umsetzung zu bringen.

Die Reaktion kann sowohl kontinuierlich als auch diskontinuierlich durchgeführt werden; bevorzugt erfolgt die Umsetzung diskontinuierlich. Bei einer kontinuierlichen Arbeitsweise wird unter Berücksichtigung der stöchiometrischen Verhältnisse die Suspension des Alkalihydrogensulfids in einem Gemisch aus Silan und polarem, aprotischem Medium in einen geeigneten Reaktor, z. B. einen mit einer Schnecke versehenen Röhrenreaktor, eingespeist und nach entsprechender Verweilzeit, umgesetzt zu Mercaptosilan und Alkalichlorid, ausgefahren.

Die zur Durchführung der erfindungsgemäßen Verfahrensweise einzusetzende Menge am polarem, aprotischem Medium sollte mindestens 50 Vol.-% des eingesetzten Silans betragen. Bevorzugt wird ein Volumenverhältnis von 80 bis 140 % angewandt. Höhere Anteile an polarem, aprotischem Medium im Gemisch mit dem Silan sind nicht von Nachteil, belasten jedoch die anschließende destillative Aufarbeitung des anfallenden Reaktionsgemisches.

Es hat sich als zweckmäßig erwiesen, die Reaktionskomponenten Silan und Alkalihydrogensulfid im Molverhältnis 1 : 1 zur Umsetzung zu bringen. Ein geringer Über- oder Unterschuß einer Komponente gegenüber der anderen hat keine wesentlichen Auswirkungen auf die auf den Umsatz der jeweiligen Unterschußkomponente bezogene Ausbeute. Die Umsetzung der Reaktionskomponenten Silan und Alkalihydrogensulfid wird bevorzugt bei Temperaturen von 0 bis 140 °C durchgeführt. Die jeweils bezüglich der Ausbeute an Zielprodukt und Ausnutzung des Reaktionsvolumens optimale Reaktionstemperatur variiert in Abhängigkeit von der Struktur der eingesetzten Silankomponente. Es hat sich gezeigt, daß bei einer Wahl der Reaktionstemperatur von 100 bis 120 °C bei Anwendung der erfindungsgemäßen Verfahrensweise Reaktionszeiten erhalten werden, die die beschriebener Verfahren um mehr als 50 % unterschreiten. Bei Anwendung von Reaktionstemperaturen oberhalb 120 °C treten geringe Ausbeuteverschlechterungen ein;

bei Anwendung von Reaktionstemperaturen unterhalb 100 °C lassen die Reaktionsgeschwindigkeiten nach.

Ein besonderer Vorteil der erfindungsgemäßen Verfahrensweise besteht darin, daß die Umsetzung im Gegensatz zu anderen Verfahrensweisen, die zur Umsetzung der Reaktanten Autoklaven benötigen, bei Normaldruck stattfindet. Dies ist möglich, weil als sulfidische Reaktionskomponenten bei dem erfindungsgemäßen Verfahren Verbindungen eingesetzt werden, die bei den erforderlichen Reaktionstemperaturen weder zerfallen noch sublimieren.

Ein weiterer überraschender Vorteil der erfindungsgemäßen Verfahrensweise besteht im Gegensatz zu anderen Verfahrensweisen darin, daß mit ihr in einer Einstufenreaktion unter Erzielung hoher Ausbeuten Mercaptosubstitutionsreaktionen an solchen Organosilicium-Verbindungen durchgeführt werden können, bei denen sich ein Halogenatom in $\beta$-Stellung zum Siliciumatom befindet. Es ist bekannt, daß bei Substitution derartiger $\beta$-Halogenatome üblicherweise unter Austritt von Ethylen in unterschiedlichem Ausmaß und meist spontaner Reaktion $\beta$-Eliminierungsprodukte gebildet werden, die die Ausbeute an Zielprodukt stark herabsetzen.

Mercaptosilane werden in ständig steigendem Maß als Haftvermittler zwischen Polymeren und anorganischen Feststoffen und bei der Modifizierung von Siliconen eingesetzt.

A) Vergleichsbeispiele

Beispiel 1

Ein 6-Liter-Glasdoppelmantelkolben, der mit einem Rührer, einem Rückflußkühler, einer Temperaturmeßstelle und einem Gaseinleitungsrohr ausgerüstet ist, wird mit 2 000 g (10,1 mol) 3-Chlorpropyltrimethoxysilan und 766 g (10,1 mol) Thioharnstoff befüllt. Das Gemisch wird unter Rühren auf 110 °C erwärmt und durch Einleiten von Ammoniak bei dieser Temperatur zur Umsetzung gebracht. Nach 48 Stunden wird die Umsetzung abgebrochen und das Reaktionsgemisch aufgearbeitet. Die Ausbeute an 3-Mercaptopropyltrimethoxysilan beträgt, auf den Einsatz an 3-Chlorpropyltrimethoxysilan bezogen, 77 %.

Beispiel 2

In der Apparatur des Beispiels 1 wird die Umsetzung mit den dort vorgegebenen Produktmengen unter Zusatz von 200 g Dimethylformamid auf dargelegte Weise durchgeführt. Nach einer Reaktionszeit von 7 Stunden ist in dem Reaktionsgemisch durch gaschromatographische Analyse kein 3-Chlorpropyltrimethoxysilan mehr nachweisbar; die destillative Aufarbeitung des Reaktionsgemisches erbringt eine Ausbeute an 3-Mercaptopropyltrimethoxysilan von 78 %, bezogen auf eingesetztes 3-Chlorpropyltrimethoxysilan.

Beispiel 3

In der Apparatur des Beispiels 1 werden 2 000 g (10,1 mol) 3-Chlorpropyltrimethoxysilan und 566 g (10,1 mol) Natriumhydrogensulfid zusammen mit 400 ml Methanol vorgelegt. Unter Rühren wird das Gemisch erwärmt und dabei gleichzeitig solange mit angeschlossener Wasserstrahlpumpe Methanol abdestilliert, bis die Temperatur im Kolben auf 110 °C angestiegen ist. Bei dieser Temperatur wird die Umsetzung fortgeführt; stündlich werden dem Kolben Kontrollproben entnommen und gaschromatographisch untersucht. Es zeigt sich, daß die Reaktion nach ca. 5 Stunden zum Erliegen kommt, wobei ein Umsetzungsgrad von ca. 65 % erreicht ist und die auf den Umsatz bezogene Ausbeute ca. 47 % beträgt.

Beispiel 4

In der Apparatur des Beispiels 1 wird die Umsetzung mit den in Beispiel 3 vorgegebenen Einsatzproduktmengen unter Zugabe von 80 g Tetrabutylammoniumbromid auf die in Beispiel 3 dargelegte Weise durchgeführt. Es zeigt sich, daß nach 2 Stunden Reaktionszeit erst 4 % der eingesetzten Silan-Menge reagiert haben. Die Reaktion wird daraufhin abgebrochen.

Beispiel 5

In der Apparatur des Beispiels 1 werden 2 000 g (8,8 mol) 2-Chlorethyltriethoxysilan und 670 g (8,8 mol) Thioharnstoff vorgelegt und auf die in Beispiel 1 dargelegte Weise zur Umsetzung gebracht.

Das Reaktionsmedium unumgesetzt passierendes Ammoniakgas ist stark mit aus dem $\beta$-Zerfall des 2-Chlorethyltriethoxysilans stammendem Ethylen verunreinigt. Die gaschromatographisch ermittelte Ausbeute

an 2-Mercaptoethyltriethoxysilan beträgt ca. 24 %, bezogen auf den Einsatz an Silan-Komponente.

Beispiel 6

In der Apparatur des Beispiels 1 werden 2 000 g (6,35 mol) p-Bromphenyltrimethoxysilan, 485 g (6,35 mol) Thioharnstoff und 400 ml Dimethylformamid vorgelegt und auf die in Beispiel 1 dargelegte Weise zur Umsetzung gebracht. Nach 48stündiger Reaktion kann im Reaktionsgemisch die Verbindung p-Mercaptophenyltrimethoxysilan nicht identifiziert werden.

Beispiel 7

In der Apparatur des Beispiels 1 werden 2 000 g (8,6 mol) 1,3-Dichlorpropyltrimethoxysilan und 1 307 g (8,6 mol) Thioharnstoff vorgelegt und auf die in Beispiel 1 dargelegte Weise zur Umsetzung gebracht. Nach 48stündiger Reaktion wird die Umsetzung abgebrochen und das Reaktionsgemisch aufgearbeitet. Die Verbindung 1,3-Dimercaptopropyltrimethoxysilan kann nicht nachgewiesen werden.

B) Erfindungsgemäße Beispiele

Beispiel 8

In der Apparatur des Beispiels 1 werden 566 g (10,1 mol) Natriumhydrogensulfid zusammen mit 2 400 g Dimethylformamid vorgelegt. Innerhalb von 60 Minuten werden 2 000 g (10,1 mol) 3-Chlorpropyltrimethoxysilan unter Rühren zugegeben, wobei sich der Kolbeninhalt auf ca. 100 °C erwärmt. Durch Nachheizen wird die Temperatur auf 110 °C erhöht und bei diesem Wert gehalten. In Zeitabständen von 15 Minuten werden dem Reaktantengemisch Proben entnommen und diese gaschromatographisch untersucht. Bereits nach Ablauf einer Reaktionszeit von 75 Minuten ist die eingesetzte Silan-Verbindung nur noch in Spuren nachweisbar. Die destillative Aufarbeitung des Reaktions-Rohgemisches ergibt eine Ausbeute von 84 % an 3-Mercaptopropyltrimethoxysilan.

Beispiel 9

In der Apparatur des Beispiels 1 werden 493 g (8,8 mol) Natriumhydrogensulfid zusammen mit 2 400 g Dimethylformamid vorgelegt. Innerhalb von 10 Minuten werden 2 000 g (8,8 mol) 2-Chlorethyltriethoxysilan über einen Tropftrichter unter Rühren zugegeben, wobei die Temperatur des Kolbeninhalts auf 90 °C ansteigt. Durch Nachheizen wird der Kolbeninhalt auf 110 °C erwärmt und bei dieser Temperatur gehalten (11 Stunden). Bei einem Umsetzungsgrad von ca. 98 % wird eine Ausbeute an 2-Mercaptoethyltriethoxysilan von 79 % erhalten.

Beispiel 10

In der Apparatur des Beispiels 1 werden 566 g (10,1 mol) Natriumhydrogensulfid zusammen mit 2 400 g Dimethylformamid vorgelegt. Innerhalb von 30 Minuten werden unter Rühren in die Suspension 1 844 g (10,1 mol) 3-Chlorpropylmethyldimethoxysilan eingespeist. Dabei steigt die Temperatur im Kolben auf 100 °C an. Der Kolbeninhalt wird noch 2 Stunden bei 110 °C gehalten und anschließend gaschromatographisch untersucht. Bei einem Umsatz von über 98 % wird eine Ausbeute an 3-Mercaptopropylmethyldimethoxysilan von über 76 % ermittelt.

Beispiel 11

In der Apparatur des Beispiels 1 werden 356 g (6,35 mol) Natriumhydrogensulfid zusammen mit 1 500 g Dimethylformamid vorgelegt. Innerhalb von 30 Minuten werden 2 000 g (6,35 mol) p-Bromphenyltrimethoxysilan unter Rühren zugegeben. Dabei erwärmt sich der Kolbeninhalt auf 95 °C. Bereits nach 3stündiger Umsetzungszeit bei 110 bis 130 °C kann die Verbindung p-Mercaptophenyltrimethoxysilan im Gaschromatogramm nachgewiesen werden.

Beispiel 12

In der Apparatur des Beispiels 1 werden 730 g (13,0 mol) Natriumhydrogensulfid zusammen mit 2 400 g Dimethylformamid vorgelegt. Innerhalb von 90 Minuten werden 1 515 g (6,5 mol) 1,3-Dichlorpropyltrimethoxysilan unter Rühren zugegeben, wobei durch Kühlung dafür gesorgt wird, daß die Temperatur im Kolben nicht über 100 °C ansteigt. In einer Nachreaktionsphase wird bei 110 °C die Umsetzung vervollständigt und anschließend die Aufarbeitung des Reaktionsgemisches vorgenommen. Die auf den Umsatz von 95 % bezogene Ausbeute an 1,3-Dimercaptopropyltrimethoxysilan beträgt 76,2 %.

Beispiel 13

In der Apparatur des Beispiels 1 werden 730 g (13,0 mol) Natriumhydrogensulfid zusammen mit 2 400 g Dimethylformamid vorgelegt. Innerhalb von 45 Minuten werden 1 593 g (6,5 mol) Bis(3-Chlorpropyl)-dimethoxysilan unter Rühren zugegeben, wobei die Temperatur auf 84 °C im Kolben ansteigt. Nach dreieinhalb Stunden Reaktionszeit bei 120 °C wird das Reaktionsgemisch aufgearbeitet. Die auf einen Umsatz von 99 % bezogene Ausbeute an Bis(3-Mercaptopropyl)dimethoxysilan beträgt 86 %.

**Patentansprüche**

**1.** Verfahren zur Herstellung von Mercaptosilanen der allgemeinen Formel

$$(HS)_a\text{-}R\text{-}\underset{\displaystyle R^2_p}{\underset{|}{Si}}(OR^1)_{3-p} \quad ,$$

in der

R ein Alkylenrest mit 1 bis 8 C-Atomen, ein Alkarylenrest, ein Arylalkylenrest oder ein Arylrest sein kann,

$R^1$ ein Alkylrest mit 1 bis 6 C-Atomen, die durch O-Atome unterbrochen sein können, oder ein Arylrest sein kann,

$R^2$ ein Alkylrest mit 1 bis 8 C-Atomen, ein Arylrest, ein Alkarylrest oder ein Aralkylrest sein kann,

p eine ganze Zahl von 0 bis 3 bedeutet,

a eine ganze Zahl von 1 bis 3 sein kann,

und der allgemeinen Formel

$$\left[(HS)_a\text{-}R\text{-}\right]_b\underset{\displaystyle R^2_p}{\underset{|}{Si}}\text{-}(OR^1)_{3-p-(b-1)} \quad ,$$

in der

a, R, $R^1$ und $R^2$ die obige Bedeutung besitzen,

b 2 oder 3 sein und

p 0, 1 oder 2 bedeuten kann, wobei $b + p \leq 4$ gilt,

durch Umsetzung von Verbindungen, welche den vorgenannten allgemeinen Formeln entsprechen, wobei die HS-Gruppe durch ein Chlor- oder Bromatom ersetzt ist, mit Alkalihydrogensulfiden, dadurch

gekennzeichnet, daß die Umsetzung der Reaktanten in Gegenwart eines polaren, aprotischen Mediums verläuft.

2. Verfahren nach Anspruch 1, dadurch gekennzeichnet, daß als polares, aprotisches Medium N,N-substituierte Dialkylacylamide eingesetzt werden.

3. Verfahren nach Anspruch 2, dadurch gekennzeichnet, daß als polares, aprotisches Medium Dimethylformamid eingesetzt wird.

4. Verfahren nach einem der Ansprüche 1 bis 3, dadurch gekennzeichnet, daß das polare, aprotische Medium in Mengen zwischen 50 und 140 Vol.-%, bezogen auf das eingesetzte Silan, angewandt wird.

5. Verfahren nach einem der Ansprüche 1 bis 4, dadurch gekennzeichnet, daß die Umsetzung im Temperaturbereich von 0 bis 140 °C, vorzugsweise von 100 bis 120 °C, durchgeführt wird.

6. Verfahren nach einem der Ansprüche 1 bis 5, dadurch gekennzeichnet, daß das Silan und das Alkalihydrogensulfid im Molverhältnis 1 : 1 zur Umsetzung gebracht werden.

## Claims

1. Process for preparing mercaptosilanes of the general formula:

$$(HS)_a\text{-}R\text{-}\underset{\substack{|\\ R^2_p}}{Si}(OR^1)_{3-p}$$

in which

| | |
|---|---|
| R may be | an alkylene radical containing 1 to 8 C atoms, an alkarylene radical, an arylalkylene radical or an aryl radical, |
| $R^1$ may be | an alkyl radical containing 1 to 6 C atoms which may be interrupted by O atoms, or an aryl radical, |
| $R^2$ may be | an alkyl radical containing 1 to 8 C atoms, an aryl radical, an alkaryl radical or an aralkyl radical, |
| p is | an integer from 0 to 3, |
| a may be | an integer from 1 to 3, |

and of the general formula

$$[(HS)_a\text{-}R\text{-}]_b\underset{\substack{|\\ R^2_p}}{Si}\text{-}(OR^1)_{3-p-(b-1)},$$

in which

| | |
|---|---|
| a, R, $R^1$ and $R^2$ | have the above meaning, |
| b may be | 2 or 3 and |
| p may be | 0, 1 or 2, where $b + p \leq 4$, |

by reacting compounds corresponding to the abovementioned formulae in which the HS group is

replaced by a chlorine or bromine atom with alkali-metal hydrogensulphide, characterized in that the reaction of the reactants proceeds in the presence of a polar aprotic medium.

**2.** Process according to Claim 1, characterized in that N,N-substituted dialkylacylamines are used as polar aprotic medium.

**3.** Process according to Claim 2, characterized in that dimethylformamide is used as polar aprotic medium.

**4.** Process according to one of Claims 1 to 3, characterized in that the polar aprotic medium is used in amounts between 50 and 140% by volume, based on the silane used.

**5.** Process according to one of Claims 1 to 4, characterized in that the reaction is carried out in the temperature range from 0 to 140 °C, preferably from 100 to 120 °C.

**6.** Process according to one of Claims 1 to 5, characterized in that the silane and the alkali-metal hydrogensulphide are reacted in the molar ratio of 1:1.

**Revendications**

**1.** Procédé de préparation de mercaptosilanes de la formule générale:

$$(HS)_a-R-\underset{\substack{| \\ R^2_p}}{Si}(OR^1)_{3-p} \quad ,$$

dans laquelle:

R peut être — un radical alkylène avec 1 à 8 atomes de C,
un radical alkaryle,
un radical arylalkylène ou
un radical aryle,

$R^1$ peut être — un radical alkyle avec 1 à 6 atomes de C, qui peuvent être interrompus par des atomes d'O, ou être
un radical aryle,

$R^2$ peut être — un radical alkyle avec 1 à 8 atomes de C,
un radical aryle,
un radical alkaryle ou
un radical aralkyle,

p représente — un nombre entier de 0 à 3,

a peut être — un nombre entier de 1 à 3,

et de formule générale:

$$[(HS)_a-R-]_b\underset{\substack{| \\ R^2_p}}{Si}-(OR^1)_{3-p-(b-1)}$$

dans laquelle:

a, R, $R^1$ et $R^2$ — ont la signification ci-dessus

b peut être — 2 ou 3 et,

p peut signifier — 0,1 ou 2 et $b + p \leqq 4$

par réaction (transformation) de composés qui correspondent aux formules générales citées précédemment, dans lesquelles le groupe HS est remplacé par un atome de chlore ou de brome, avec des

sulfures d'hydrogène alcalins, caractérisé en ce que la réaction (transformation) des réactants se développe en présence d'un milieu polaire, aprotique.

2. Procédé selon la revendication 1, caractérisé en ce que comme milieu polaire, aprotique on met en oeuvre des dialkylacylamides substitués N,N.

3. Procédé selon la revendication 2, caractérisé en ce que comme milieu polaire, aprotique on met en oeuvre du diméthylformamide.

4. Procédé selon une des revendications 1 à 3, caractérisé en ce que le milieu polaire, aprotique est utilisé en quantité comprises entre 50 et 140 % en volume, par rapport au silane mis en oeuvre.

5. Procédé selon une des revendications 1 à 4, caractérisé en ce que la réaction (transformation) est réalisée dans la tranche de température de 0 à 140 ° C, de préférence de 100 à 120 ° C.

6. Procédé selon une des revendications 1 à 5, caractérisé en ce que le silane et le sulfure d'hydrogène alcalin sont amenés à la réaction (transformation) dans le rapport molaire 1:1.